(19) Europäisches Patentamt
European Patent Office
Office européen des brevets

(11) **EP 2 066 040 A1**

(12) **EUROPEAN PATENT APPLICATION**

(43) Date of publication:
**03.06.2009 Bulletin 2009/23**

(51) Int Cl.:
***H04B 1/707*** *(2006.01)*

(21) Application number: **07121601.4**

(22) Date of filing: **27.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Nemerix SA**
**6928 Manno (CH)**

(72) Inventor: **Brenner, Joel**
**6864 Arzo (CH)**

(74) Representative: **P&TS**
**Patents & Technology Surveys SA**
**Rue des Terreaux 7,**
**Postfach 2848**
**2001 Neuchâtel (CH)**

(54) **Multipath mitigation GNSS Receiver**

(57)     An improved GNSS or GPS receiver with a code-tracking loop comprising a plurality of correlators, arranged to extract a plurality of samples of the autocorrelation function of the C/A code, and a discriminator performing linear regression on both sides of the autocorrelation peak, to determine the autocorrelation peak position at the crossing point of two straight lines. The lines are independently adapted to the sides of the correlation peak and, therefore, the receiver can handle well multipath situations, in which the correlation peaks are distorted.

Fig. 2

EP 2 066 040 A1

**Description**

Field of the invention

The present invention relates generally to digital radio receivers for spread-spectrum signals as those used in Global Navigation Satellite Systems (GNSS). In particular, the present invention relates to a receiver that has been adapted to function in environment characterized by multipath fading.

Description of related art

The Global Navigation Satellite Systems (GNSS) generically include the Global Positioning System (GPS), operated by the United States, the Global Orbiting Navigation Satellite System (GLONASS) operated by the Russian Federation, the COMPASS (also known as Beidou-2) proposed by the Chinese government, the projected Galileo positioning system, to be built by the European Union, and the proposed Indian IRNSS system. Other GNSS system, to which the present invention may be applied, are under test, or will be proposed and realized in the future.

GNSS radio signals are located in the UHF portion of the radio spectrum, most often above 1 GHz, have power level, at ground, of the order of -120 dBm or less and are generally direct-sequence spread-spectrum signals modulated by pseudo-random codes or similar binary sequences, which are used in the receiver for positioning and navigation. The general functioning of a satellite radiolocalization devices are well known and will be resumed briefly in the description. Reference is also made to patent applications EP1198068 and WO05003807 in the name of the applicant.

Satellite radiolocalization systems, such as GPS (Global Positioning System), GLONASS or Galileo rely on the reception of radio signals broadcast from a number of orbiting satellites and use the information contained in these signals to determine the distances, or ranges, from the receiver to each of the received satellites. The orbits of the satellites being known, absolute time and the location of the GPS receiver can then be determined geometrically.

In the context of the present invention the terms "receiver" and "GPS receiver" can designate a complete self-contained receiver device, integrating a RF front-end and a GNSS processor, with optionally other functions, but also a module, included in a complex entity, for example a GPS module in a cellular phone, a car alarm, a PDA (Portable Digital Assistant) and so forth. The terms above may also indicate a pluggable module, which may be connected with a hosting device by means of an appropriate bus, for example a GPS PC-card.

The terms "receiver" and "GPS receiver" should also be understood, in the context of the present invention, as including one of more integrated circuits, arranged to realize a complete GPS receiver or a complete GPS module, as defined above.

The following description relates mostly to the GPS Global Positioning System. The invention is not however limited to this particular system but can also be employed in receivers for radiolocalization systems based on the same principles, for example the GLONASS system or the Galileo system, and can be extended to other future radiolocalization systems to which the invention is applicable.

In the case of the original GPS radiolocalization system, each of the operational GPS satellites, also indicated as Space Vehicle or SV, transmits a navigational radio signal at two carrier frequencies, referenced as "L1 " and "L2" and situated at 1572.42 MHz and 1227.60 MHz respectively. The L1 and L2 carriers are modulated by two digital ranging code sequences, called the C/A (coarse acquisition) code and the P(Y) code, the latter being mostly restricted to the US government and military.

The C/A code, which is used by commercial GPS receiver, is modulated in the L1 and in the L2 carriers. C/A codes, which are unique for each GPS satellite, are pseudo-random Gold codes comprising a repetition of a 1023 bits, or "chips", with a transition rate of 1.023 MHz, and are often indicated in short as PRN. The C/A code thus repeats itself every millisecond. The ranging code sequences are synchronized to a common precise time reference, the "GPS time" which is held by precise clocks on board of each satellite, and which are synchronized to a master clock. The effect of the PSK modulation with the C/A code is to spread the spectrum of the modulated signal over a 1 MHz bandwidth.

Other radiolocalization systems, for example the proposed Galileo system and proposed extensions to the GPS system, also employ similar or equivalent signal structures, based on ranging codes synchronized to a common standard of absolute time.

Both L1 and L2 carriers further carry a 50 bps navigation message, the NAV code. The navigation message contains, along with other information, the coordinates of the GPS satellites as a function of time, clock corrections, and atmospheric data. The NAV message is encoded by inverting the logical value of the C/A code whenever the NAV bit is "1", and leaving it unaltered otherwise.

The signal strength of the GPS signals on earth surface is, nominally, -130 dBmW, a value which is further attenuated whenever the view of the sky is obstructed, and especially within buildings. Other satellite navigation systems provide signals of comparable strength. Such levels are well below the noise floor, thus the signal can be received only by use of statistical techniques.

In order to acquire these codes and perform a position fix a GPS receiver generates, for each received satellite, a local replica of the C/A code, the PRN code, adjusted to a local NCO running at a frequency close to 1.023 MHz. The code is then time-shifted, correlated with the received signal in a correlation engine of the receiver, and integrated, for a time that can be more or less long according to the noise level, until a peak of correlation value is obtained for a certain value of time-shift, that depends from the distance between the receiver and the satellite.

The amount of time-shift needed to achieve optimal correlation, or pseudo-range, is an indication of the distance between the satellite and the GPS receiver. The internal clock of the GPS is usually affected by a large error with respect to the GPS satellite clocks. In order to resolve this error a GPS receiver must acquire at least four satellites to provide a position fix comprising the three space coordinates x, y, z and time t.

The phase in which the GPS receiver endeavors to localize a sufficient number of satellite signals in the phase offset - Doppler shift space with little or no knowledge of their position is usually named the "acquisition" state. Once the peaks are found, their Doppler frequency and phase offset change constantly, because of the motion of the space vehicles and the receiver. In the "tracking" state, the system must follow the drift, of the correlation peaks, in order to provide valid position fixes.

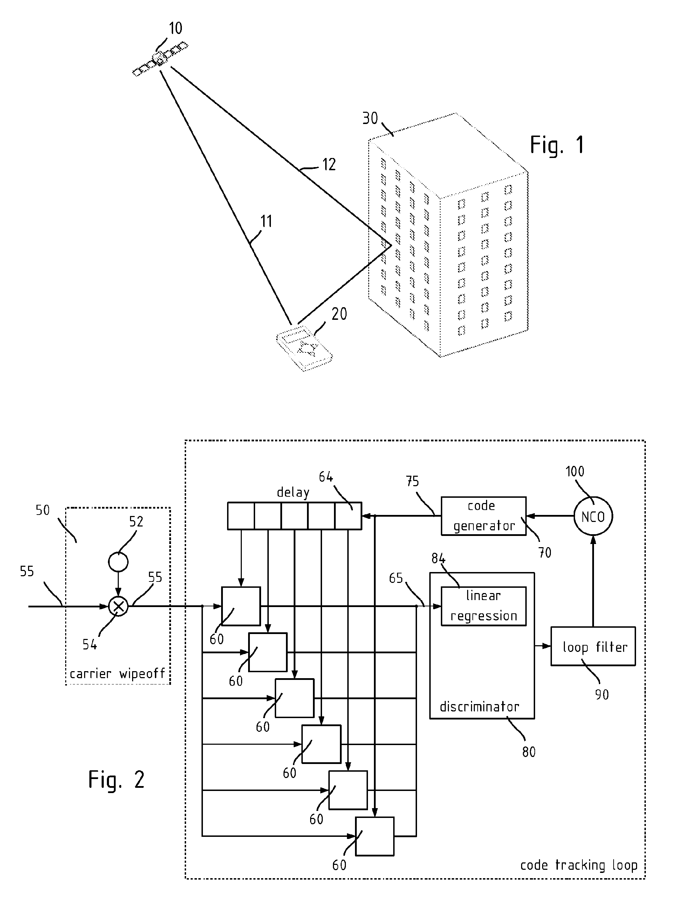

The GPS system relies on line of sight propagation of signals. In true propagation conditions, however, and particularly in urban situation with high buildings acting as mirror reflectors for the radio signals, the receiver may get, together with the direct signal, also reflected signals, which have a different propagation time. Figure 1 shows this: the signal perceived by receiver 20 is a complex sum of the direct line-of-sight signal 11 and the signal 12 reflected by the building 30. At the receiver's antenna, the direct signal and the reflected signal combine constructively or destructively, according to the respective phases. Since the multipath signals travel a longer distance, they will necessary be received with a delay, which equals the difference in length between the direct path and the reflected path, divided by the constant propagation speed. In the following specification, delays may be expressed either in time or in space units, being understood that one notation can be converted to the other by dividing or multiplying by the known signal propagation velocity. The space notation is useful because it immediately gives an idea of the kind of positioning errors that multipath can produce.

The multipath delay is, in typical conditions, comparable in value to the duration of one chip in the PRN code. Since the autocorrelation peaks Gold codes have a natural width, of one chip, the multipath delay does not, in general, produce an independent correlation peaks, but rather combines with the direct signal, giving origin to a distorted peak. or, under certain phase relationships, to a double peak.

Most GNSS receivers implement a simple discriminator algorithm that does not take peak distortion into account at all. In presence of multipath, therefore, these receivers suffer degradation in accuracy, and an increase in processing time.

US6636558 discloses an apparatus and method to reduce inaccuracy due to multipath in a spread spectrum ranging/positioning system receiver. Improved peak tracking in the presence of multipath interference is accomplished with an improved discriminator. Peak tracking of a correlation function is performed by obtaining at least four correlation points along the correlation function; generating an error signal based upon a computation of a local maximum value of a curvilinear function (comprises a cubic polynomial function) that passes through the at least four correlation points; limiting the generated error signal's magnitude to a boundary value; and adjusting a receiver-generated pseudorandom noise code based on the error signal. This approach is rather computation-intensive, and is hardly suitable for low-power battery-operated portable navigation devices.

WO9514937 discloses a receiver for demodulating a spread-spectrum localization signal in which the discriminator uses multiple samples of the autocorrelation peak, located on both sides of the maximum. These correlators provide a more correct result in presence of distorted peaks, but have a reduced operation range and may be somewhat more sensitive to noise than conventional correlators.

There is therefore a need to provide a low-power GNSS receiver able to deal with multipath distortion, with less degradation in performance than known devices. The present invention aims moreover to provide a low-power GNSS receiver that does not suffer from the shortcomings of the prior art in presence of multipath.

Brief summary of the invention

According to the invention, these aims are achieved by means of the object of the appended claims, and particularly by a GNSS receiver for decoding a radio signal modulated by at least one frequency-spread code, the receiver having at least code tracking loop, for tracking the phase of said frequency-spread code, comprising a plurality of correlators arranged to sample the autocorrelation function of the frequency-spread code modulated in the radio signal, the code tracking loop comprising in addition a discriminator to determine the phase of the frequency-spread code, arranged to execute linear regressions on the samples provided by the correlators, and to compute parameters of a triangle approximating the shape of a peak in said autocorrelation function, and to determine the phase of said frequency-spread code from the position of the vertex of said triangle.

According to another inventive aspect, these aims are achieved by a GNSS Receiver for decoding a radio signal modulated by at least one frequency-spread code, the receiver having at least code tracking loop, for tracking the phase of said frequency-spread code, comprising at least one correlator arranged to sample the autocorrelation function of the frequency-spread code modulated in the radio signal, the code tracking loop comprising in addition a discriminator to determine the phase of the frequency-spread code, arranged to execute two linear regressions on two subsets of the samples provided by the correlators, and to compute parameters of a triangle approximating the shape of a peak in said autocorrelation function, the first regression providing an interpolating straight line for a leading flank of the correlation peak, and the second one providing an interpolating straight line for a trailing flank of the correlation peak, and to determine the phase of said frequency-spread code from the position of the vertex of said triangle, wherein one central sample is comprised in both subsets, one subset comprising the central sample and samples preceding in phase the central sample, and the other subset comprising the central sample and samples following in phase the central sample.

Moreover, these aims are achieved according to the invention by a GNSS Receiver for decoding a radio signal modulated by at least one frequency-spread code, the receiver having at least code tracking loop, for tracking the phase of said frequency-spread code, comprising at least one correlator arranged to sample the autocorrelation function of the frequency-spread code modulated in the radio signal, the code tracking loop comprising in addition a discriminator to determine the phase of the frequency-spread code, arranged to execute two linear regressions on two subsets of the samples provided by the correlators, and to compute parameters of a triangle approximating the shape of a peak in said autocorrelation function, the first regression providing an interpolating straight line for a leading flank of the correlation peak, and the second one providing an interpolating straight line for a trailing flank of the correlation peak, and to determine the phase of said frequency-spread code from the position of the vertex of said triangle, wherein all the samples contained in the first subset precede in phase all the samples of the second subset, the first subset providing an interpolating straight line for a leading flank of the correlation peak, and the second one providing an interpolating straight line for a trailing flank of the correlation peak.

Brief Description of the Drawings

The invention will be better understood with the aid of the description of an embodiment given by way of example and illustrated by the figures, in which:

- Figure 1 shows schematically a propagation geometry leading to multipath fading.

- Figure 2 is a simplified block diagram illustrating a tracking loop in a receiver according to one aspect of the present invention.

- Figures 3a and 3b show the composition of direct and reflected signal in constructive and destructive interference, and its effect on the shape of the correlation peak

- Figure 4 shows a loop delay error from a conventional discriminator as a function of the multipath delay

- Figures 5a and 5b illustrate two sampling schemes according to two variants of the discriminator of the present invention.

- Figures 6a to 6c compare the error estimation function of a conventional discriminator and two discriminators according to the present invention as a function of the multipath delay.

- Figures 7a to 7c compare the loop delay error of a conventional discriminator and two discriminators according to the present invention as a function of the multipath delay.

Detailed Description of possible embodiments of the Invention

Figure 2 represents, in a strongly simplified way, a code tracking loop in a GNSS receiver according to one aspect of the present invention. The code tracking loop (also termed Delay Locking Loop or DLL) operates from a carrier stripped signal provided by the carrier wipeoff unit 50, which in turn includes, as it is known in the art, a carrier NCO 52 and a multiplier 54. The input to the carrier wipeoff unit 50 is, for example, a low-IF digital GPS signal.

Even if it is not explicitly represented in the figure, the input and output signals of the carrier-wipeoff unit 50 are, in general, complex signals, characterized by two components, an in-phase (I) component and a quadraphase (Q) component. The output 55 of the carrier-wipeoff unit 50 is a baseband spread-spectrum signal from which the carrier frequency and, preferably, the Doppler shift have been subtracted. It is presented to the input of a plurality of correlators 60, which multiplies it by a local replica of the frequency spread code 75 generated by the local code generator 70. The frequency spread code 75 will be, for example one of the C/A codes (1023 chip Gold sequences) of the GPS system, or other codes in other GNSS systems. For simplicity's sake, we will refer in the following to the GPS implementation, being understood that the present invention can be applied to other frequency spread codes and GNSS system as well. Even if figure 2 represents six correlators, this is not an essential feature of the invention, and the number of correlators implemented may vary, according to the circumstances, and as it will be clear from the forthcoming embodiments.

This description is given by way of example only, and should not be interpreted as a limitation of the present invention. In particular the various elements and modules described must be understood in functional terms, and do not necessarily correspond to physical circuit elements. In particular several functions may be carried out by software modules, executed by one or more digital processors.

Also, even if the various correlators 60, for example, are here described as totally independent and parallel, for the sake of clarity, some of their features or resources can be shared as the circumstances require.

The programmable delay unit 64 provides, to each of the correlators 60, a shifted copy of the local code 75. In this way the correlators 60 generate a plurality of spaced-apart samples of the autocorrelation function of the received code. The delay introduced by delay unit determines the spacing of the samples produced of the correlators. The delay unit 64 could be realized by a shift register, for example, or in any other equivalent way. In typical tracking conditions, the samples will be spaced, by a fraction of chip, for example, by 1/8 chip or 1/4 chip.

Discriminator 80, whose functioning will be explained in detail later, determines a position of the autocorrelation peak, based on the samples provided by the correlators and generates a correction signal that is fed to the code NCO 100, trough the code loop filter 90, in order to lock the phase of the locally-generated code 75 to that of the received code.

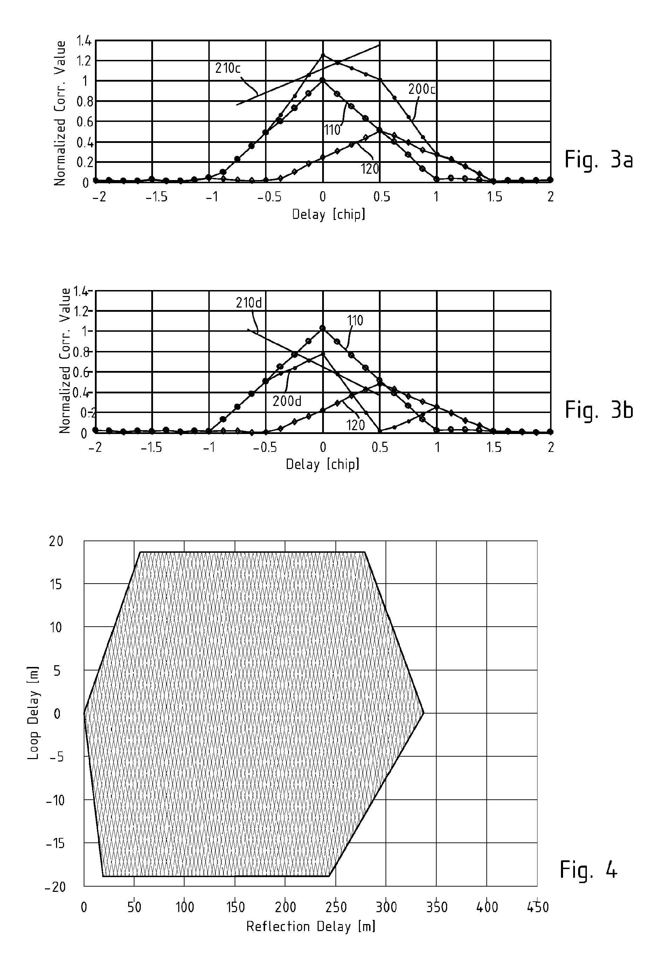

In absence of multipath fading, and under reasonable approximations, the shape of the autocorrelation peak of a GPS C/A code is an isosceles triangle, with a base width of 2 chips. Multipath, however distorts the ideal shape of the peak, as it is shown in Figures 3a and 3b.

As already mentioned, the direct signal and the reflected signal give rise to an interference pattern at the receiver, according to the relative phase shift. Figure 3a illustrates the compound autocorrelation peak in condition of fully constructive interference. In this case, presented by way of example, the reflected RF signal is attenuated by 50% with respect to the direct signal, and has a delay of ½ chip, which corresponds, given that the chip rate of GPS C/A signal is fixed to 1.023 Mchips/s, to a path difference of environ 146.5 metres. Although multipath can happen in a variety of different situations, such values are typical and commonly encountered in urban environments.

In figure 3a the direct RF signal and the reflected RF signal are in phase and their amplitudes sum together. The compound autocorrelation peak 210c is given by the sum of the ideal peak 110 expected from the direct signal alone, and the peak 120 of the reflected signal, delayed and attenuated. The compound peak 210 is no longer approximated by an isosceles triangle. The marks on peak profiles 110, 120 and 210 represent equally spaced samples with a phase difference of 1/8th of a chip.

In condition of destructive interference, all other parameters being the same as in the previous example, the RF signals have opposite phases and subtract. As a result, the compound autocorrelation peak in destructive interference conditions has the shape shown in figure 3b. Again the shape of the peak is no longer isosceles. The right side of the peak (the "late" side) is steeper than the left side, while in conditions of constructive interference it was just the opposite. This is clear by comparing the slope of straight lines 210c and 210d, which join two equal-spaced points on either side of the maximum correlation peak.

Conventionally, known GNSS receiver implement the discrimination in the code tracking loop assuming an undistorted peak shape. Such known discriminators include, among others, the standard "Early minus Late" normalized discriminator which is presented here for comparison purposes and has the following formulation:

$$T = k \frac{E-L}{E+L} \qquad (1)$$

where k changes in function of the correlator spacing and E an L represent the output of two correlators on either side of maximum correlation peak.

Figure 4 shows the result of a simulation of the loop delay resulting from a code phase loop in presence of a multipath signal using the above presented "Early minus Late" discriminator. The multipath error continues to drift between positive and negative values because of the alternation of constructive and destructive interference due to the sliding delay. This produces large and unpredictable loop delays in the hatched area.

The multipath introduced absolute error increases or decreases as a function of the correlation spacing between the two used correlators. Reducing the correlation spacing reduces the tracking error but reduces also the tracking capture range and requires a sharper correlation triangle and therefore a greater IF bandwidth. The reduction of the correlator spacing for multipath mitigation purposes is commonly known as narrow correlation.

According to one aspect of the present invention, an improved discriminator is based on the analytic description of the correlation triangle near to the maximum correlation peak. The discriminator executes linear regressions on the samples provided by the correlators, and computes parameters of a triangle approximating the shape of the autocorrelation peak.

Reverting to figure 2, the linear regression is represented by block 84 of the correlator 80 uses an over determined linear regression approach to determine two straight lines interpolating the two sides of the correlation peak. Assuming that the noise is normally distributed, the least-square method can be applied and the linear regression is given by:

$$y = my + b$$
$$\begin{cases} Y_1 = b + mX_1 \\ Y_2 = b + mX_2 \\ Y_3 = b + mX_3 \end{cases}$$
$$m = \frac{n\sum xy - \sum x \sum y}{n\sum x^2 - \left(\sum x\right)^2} \qquad (2)$$
$$b = \frac{\sum y - m\sum x}{n}$$

where b and m represent the intercept, respectively the slope of the straight line that interpolates the fit data.

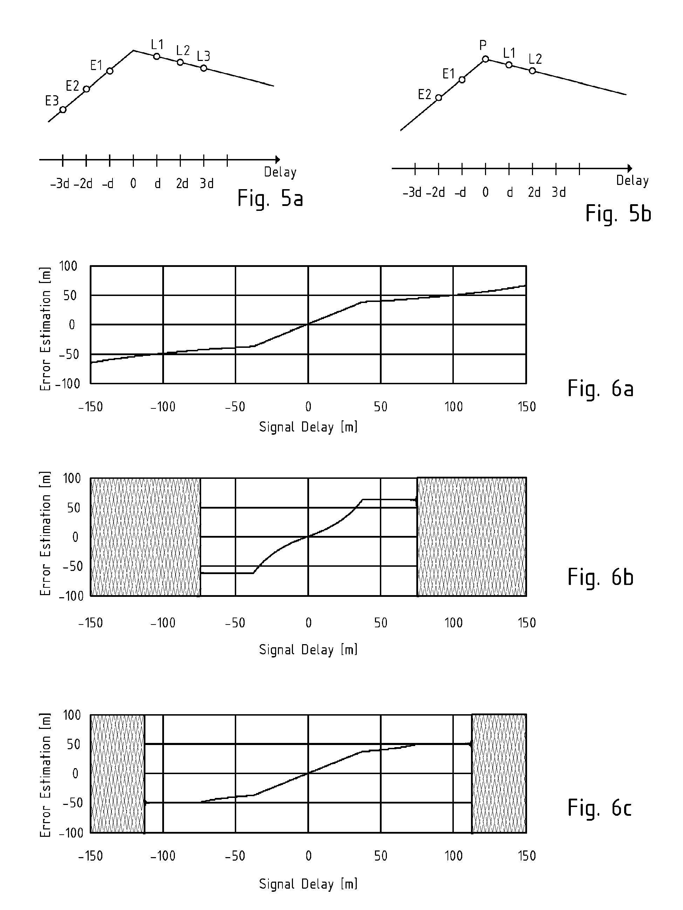

Figure 5a represents a possible disposition of the correlators 6a around the autocorrelation peak according to one embodiment of the present invention. In this case, to which we will refer as the "symmetric" discriminator algorithm, six correlators are used, which produces six samples of the autocorrelation peak split in two subsets: $E_1$, $E_2$, $E_3$, and $L_1$, $L_2$, $L_3$,. The first three samples of the first subset $E_1$, $E_2$, $E_3$, have negative delays, that is are "early" samples, while the three samples of the second subset $L_1$, $L_2$, $L_3$, on the other side of the autocorrelation peak are "late samples". On each of the two subsets, a linear regression is performed. According to the presented example, the $E_1$, $E_2$, $E_3$ samples and the $L_1$, $L_2$, $L_3$ samples have a constant spacing d, the early and late set being separated by a 2d interval. This choice provides some useful mathematical simplifications but the invention may be embodied also by spacing the discriminators otherwise.

Appling the linear regressions (2) on the above presented correlator layout we get:

$$\begin{cases} d_E = \left[-d;-2d;-3d\right] \\ E_1 = b_E + m_E d_E(1) \\ E_2 = b_E + m_E d_E(2) \\ E3 = b_E + m_E d_E(3) \end{cases}$$

$$\begin{cases} d_L = \left[d;2d;3d\right] \\ L_1 = b_L + m_L d_L(1) \\ L_2 = b_L + m_L d_L(2) \\ L3 = b_L + m_L d_L(3) \end{cases}$$

after some algebraic simplifications that will not be included here for concision's sake, one obtains:

$$m_E = \frac{E_1 - E_3}{2d}$$
$$b_E = \frac{4E_1 + E_2 - 2E_3}{3} \qquad (3)$$

$$m_L = \frac{L_3 - L_1}{2d}$$
$$b_L = \frac{4L_1 + L_2 - 2L_3}{3} \qquad (4)$$

Formulas (3) and (4) represent two straight lines, approximating the two sides of the correlation peak distorted by multipath. Each straight line is obtained by a linear regression on one of the sides of the correlation peak and the straight lines provide a parameterization of a triangle approximating the shape of the autocorrelation peak. The most probable position *T* of the correlation maximum peak is at the crossing of the two lines

$$T = \frac{b_L - b_E}{m_E - m_L} = \frac{2d}{3} \cdot \frac{4(L_1 - E_1) - 2(L_3 - E_3) + L_2 - E_2}{(E_1 + L_1) - (E_3 + L_3)} \qquad (5)$$

The code tracking loop, when active, will drive the local code generator in order to correct the phase difference, provided by the discriminator T, between the local code generated by generator 70 and the received frequency-spread code, and in this manner maintains the two subsets on both sides of the correlation peak.

According to another aspect of the present invention the code tracking loop comprises five discriminator 60 with central frequencies as shown in figure 5b. In this case, to which we will refer as the "central" discriminator algorithm, five equally spaced samples $E_1$, $E_2$, P, $L_1$, $L_2$, are used: $E_1$, $E_2$, are on advanced in phase with respect to the position of the autocorrelation peak, while $L_1$, $L_2$ are retarded. The discriminator performs a first linear regression on a first subset comprising the two early samples $E_1$, $E_2$ plus the central sample P to obtain a first straight line approximating the left flank of the autocorrelation peak; and a second linear regression on a second subset comprising the two late samples $L_1$, $L_2$ plus the central sample P to obtain a second straight line approximating the right flank of the autocorrelation peak. The central correlation samples P is comprised in both the linear regression subsets.

Applying again the linear regression formulas (2) one obtains in this case:

$$m_E = \frac{P - E_2}{2d}$$
$$b_E = \frac{4P + E_1 - 2E_2}{3} \qquad (6)$$

$$m_L = \frac{P - L_1}{2d}$$
$$b_L = \frac{4P + L_1 - 2L_2}{3} \tag{7}$$

and

$$T = \frac{b_L - b_E}{m_E - m_L} = \frac{d}{3} \cdot \frac{2(L_2 - E_2) + (L_1 - E_1)}{2 \cdot P - E_2 - L_2} \tag{8}$$

The code tracking loop, when active, will drive the local code generator in order to correct the phase difference, provided by the discriminator T, between the local code generated by generator 70 and the received frequency-spread code, and in this manner maintains the central point close to the maximum of the correlation peak.

Figures 6a to 6c represent the response function of the conventional "Early - Late" discriminator of formula (1), respectively of the "central" discriminator of figure 5b and formula (8), and of the "symmetric" discriminator of figure 5a and formula (5). One can see that the "Early - Late" discriminator has the largest capture range, while the other algorithm fail to provide a stable value if the signal delay exceed certain limits, which are narrower for the central discriminator, and broader for the symmetric discriminator.

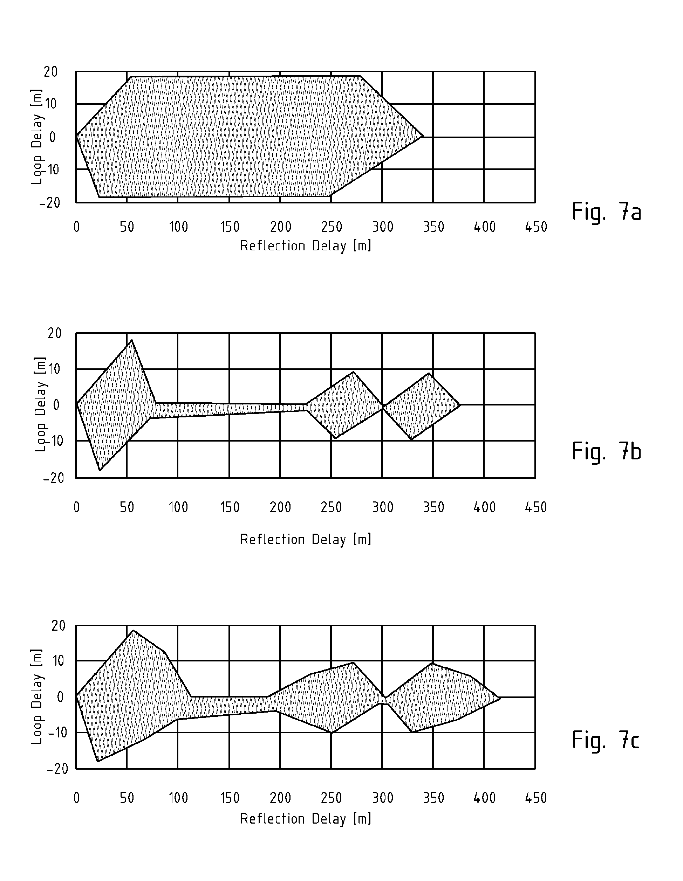

The advantages provided by the discriminators proposed in the present invention are however apparent when one considers figure 7a-7c, which represent the loop delay for the three algorithms mentioned above, in a simulated multipath environment with the same parameters as for figure 4. Figure 7a is the same as figure 4 and is here repeated for the sake of comparison. Figure 7b represents the resulting code loop delay in the case of the "central" discriminator of figure 5b, and figure 7c the same for the symmetric discriminator of figure 5a. The reduction in the loop delay is apparent for both the "central" and the "symmetric" algorithm, the former giving the best results in term of loop delay, while the latter is somewhat advantaged in that its response is broader and more linear (cf. figure 6c).

Apart from the presented example, the present invention can also include cases in which the number of correlators is not limited to 5 or 6, but more correlators are provided, and the discriminator computes linear regressions on a number of samples larger than three. For example the shape of the autocorrelation peak may be approximated by two sides of a triangle, each obtained by a linear regression on four, five, six or more samples, placed on either flank of the peak or on its summit. The present invention also may be modified by varying the spacing of the samples, which needs not be equal for all samples or for all samples in a regression set. According to another non-represented variant, the samples in each regression set could have different weights, as opposed to the present case in which each sample has the same statistic weight.

## Claims

1. GNSS Receiver for decoding a radio signal modulated by at least one frequency-spread code, the receiver having at least one code tracking loop, for tracking the phase of said frequency-spread code, comprising a plurality of correlators arranged to sample the autocorrelation function of the frequency-spread code modulated in the radio signal, the code tracking loop comprising in addition a discriminator to determine the phase of the frequency-spread code, the discriminator being arranged to execute linear regressions on the samples provided by the correlators, and to compute parameters of a triangle approximating the shape of a peak in said autocorrelation function, and to determine the phase of said frequency-spread code from the position of the vertex of said triangle.

2. The receiver of the previous claim, further arranged to correct the phases at which said correlators sample the autocorrelation function, according to the determined phase of said frequency-spread code in order to close the code tracking loop.

3. The receiver of the previous claim, in which the sides of the triangle are not constrained to have equal slopes.

**4.** The receiver of claim 1, in which the regression is a least-square linear regression.

**5.** The receiver of any of the previous claims, further comprising a local code generator in the code tracking loop, the discriminator being arranged to determine the phase difference between the frequency-spread code and the local code generator, and the tracking loop being arranged to pilot the local generator in order to correct said difference.

**6.** The receiver of the previous claim, in which the discriminator is arranged to compute a fist linear regression on a first subset of samples of the autocorrelation function and a second linear regression on a first subset of samples of the autocorrelation function, the first linear regression providing an interpolating straight line for a leading flank of the correlation peak, and the second linear regression providing an interpolating straight line for a trailing flank of the correlation peak.

**7.** The receiver of any of the previous claims, in which the plurality of correlators includes at least five correlators, providing autocorrelation values at different phase in the frequency-spread code, and in which each of said regression is performed on a subset of said samples comprising at least three autocorrelation values.

**8.** The receiver of claim 6, in which one central sample is comprised in both subsets.

**9.** The receiver of the previous claim, wherein the code tracking loop is arranged to correct the phase of the local code generator, in order to maintain the central sample close the maximum of the correlation peak.

**10.** The receiver of claim 6, wherein all the samples contained in the first subset precede in phase all the samples of the second subset.

**11.** The receiver of the previous claim, wherein the code tracking loop is arranged to correct the phase of the local code generator, in order to maintain two subsets on both sides of the maximum of the correlation peak.

**12.** The receiver of claim 6, in which first and second subsets split the discriminators in two symmetrical halves.

**13.** The receiver of any of the previous claims, specially adapted to receive and track the phases of a plurality of spread-spectrum ranging signals from a plurality of localization satellites, further comprising a position determination unit, arranged to derive a positional fix from said tracked phases.

Fig. 1

Fig. 2

delay

carrier wipeoff

code generator

NCO

linear regression

discriminator

loop filter

code tracking loop

Fig. 3a

Fig. 3b

Fig. 4

Fig. 5a

Fig. 5b

Fig. 6a

Fig. 6b

Fig. 6c

Fig. 7a

Fig. 7b

Fig. 7c

**European Patent Office**

**EUROPEAN SEARCH REPORT**

Application Number

EP 07 12 1601

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 2 866 711 A (SOISIC [FR]) 26 August 2005 (2005-08-26) | 1-3,5,6, 8-13 | INV. H04B1/707 |
| Y | * page 1, line 1 - line 30 * * page 10, line 30 - page 14, line 29; figures 1-5 * | 4,7 | |
| X | TOWNSEND B ET AL: "Practical approach to the reduction of pseudorange multipath errors in a L1 GPS receiver" PROCEEDINGS OF THE INSTITUTE OF NAVIGATION (ION) GPS, XX, XX, vol. 1, 1 January 1994 (1994-01-01), pages 143-148, XP002302145 * page 144, right-hand column, line 1 - page 146, right-hand column, line 2; figures 2-9 * | 1-3,5,6, 10,11,13 | |
| Y | WO 2004/015444 A (GLOBAL LOCATE INC [US]) 19 February 2004 (2004-02-19) * page 10, line 17 - page 11, line 11; figure 3 * | 4,7 | |
| A | * page 20, line 20 - page 23, line 4; figures 10,11 * * page 2, line 16 - page 32, line 2; figures 14a,14b,15 * | 1-3,5,6, 8-13 | TECHNICAL FIELDS SEARCHED (IPC) H04B |
| A | US 6 236 673 B1 (JUELG THOMAS [DE]) 22 May 2001 (2001-05-22) * column 5, line 49 - column 6, line 15; figures 1,21,22 * | 1-13 | |

The present search report has been drawn up for all claims

| Place of search | Date of completion of the search | Examiner |
|---|---|---|
| The Hague | 29 May 2008 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 07 12 1601

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2008

| Patent document cited in search report | | Publication date | Patent family member(s) | | Publication date |
|---|---|---|---|---|---|
| FR 2866711 | A | 26-08-2005 | NONE | | |
| WO 2004015444 | A | 19-02-2004 | AT | 341005 T | 15-10-2006 |
| | | | AU | 2003261406 A1 | 25-02-2004 |
| | | | DE | 60308691 T2 | 28-06-2007 |
| | | | EP | 1529224 A1 | 11-05-2005 |
| | | | JP | 2005535880 T | 24-11-2005 |
| | | | KR | 20050054917 A | 10-06-2005 |
| US 6236673 | B1 | 22-05-2001 | DE | 19712751 A1 | 08-10-1998 |
| | | | FR | 2761479 A1 | 02-10-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1198068 A
- WO 05003807 A

- US 6636558 B
- WO 9514937 A